# EUROPEAN PATENT SPECIFICATION

(11) **EP 3 891 079 B1**
(45) Date of publication and mention of the grant of the patent: **15.03.2023**
(21) Application number: 19809106.8
(22) Date of filing: 02.12.2019
(51) Int. Cl.: B65D 65/00, C08J 5/18, C08K 3/34, C08K 5/00, C08L 23/04, C08L 23/08, B29C 48/10, B65B 55/00, B65D 81/28

(54) **ANTIMICROBIAL POLYMER COMPOSITION FOR SHELF-LIFE EXTENSION**
ANTIMIKROBIELLE POLYMERZUSAMMENSETZUNG ZUR HALTBARKEITSVERLÄNGERUNG
COMPOSITION POLYMÈRE ANTIMICROBIENNE POUR EXTENSION DE LA DURÉE DE VIE

(30) Priority: 04.12.2018 EP 18209968
(43) Date of publication of application: 13.10.2021
(73) Proprietor: Clariant International Ltd, 4132 Muttenz (CH)
(72) Inventor: ALEXANDRE, Edson Alexandre Marçal, 04.795-900 São Paulo (BR); MACHADO, Beatriz Valfogo, 04.795-900 São Paulo (BR)
(74) Representative: Appleyard Lees IP LLP
(86) International application number: PCT/EP2019/083239
(87) International publication number: WO 2020/114939

(56) References cited:
- EP-A1- 1 609 816
- JP-A- 2018 111 794
- US-A1- 2009 045 095
- MICHELE PITTOL ET AL: "Antimicrobial Performance of Thermoplastic Elastomers Containing Zinc Pyrithione and Silver Nanoparticles", MATERIALS RESEARCH, vol. 20, no. 5, 1 October 2017 (2017-10-01), pages 1266-1273, XP055591493, BR ISSN: 1516-1439, DOI: 10.1590/1980-5373-mr-2017-0137

## Description

The invention relates to polymer compositions comprising a thermoplastic polymer matrix, 50 to 6000 ppm of zinc pyrithione, 50 to 6000 ppm of silver, 100 to 6000 ppm of a zeolite, and optionally 0 to 5% by weight of one or more polymer additives. Furthermore, the invention relates to a masterbatch and a method for preparing such polymer composition. The present invention further relates to a food packaging comprising or consisting of such polymer composition and to the use thereof for increasing shelf-life of foodstuff such as baked goods.

Perishable goods such as foodstuff often have a rather poor shelf-life. For instance, baked goods often start mildewing after several days. The common ways of preserving mildewing have significant drawbacks. Unpacked baked goods, for instance, tend to become undesirable hard due to drying. The addition of preservatives to foodstuff or other perishable goods such as cosmetics and consumer goods may prevent microbial growth, but may have undesired side effects on mammals, including humans, eating the food or using the other compositions.

It was found that also higher contents of classical antimicrobials such as zinc pyrithione are not effective for shelf-life extension, in particular when not in direct contact with the perishable good to be protected. Likewise also a silver antimicrobial alone cannot prevent microorganism growth without direct contact. Further, larger contents of such or other preservatives may also affect taste and/or odor. Thus, there is a desire for a packing material that increases shelf-life of perishable goods such as foodstuff.

US-A 2009/045095 (BAG Innovations Group LLC) teaches a package for perishable foodstuff that contains a silver ion loaded zeolite as an antimicrobial additive and an ethylene-absorbing additive. The technical effect of such package is, however, limited. Further, the package of US-A 2009/045095 requires high amounts of additives such as at least 2.5% by eight of zeolite and high antimicrobial contents. Such high contents can have negative effects on the foodstuff.

For example, such additives can migrate into the food. Furthermore, high contents of zeolite increase light diffusion and, thus, lead to an undesired turbidity of a polymer composition such as a polymeric film. A film having a good transparency is not obtained.

There is still an unmet need for a polymer composition that effectively protects perishable goods such as foodstuff and that is preferably transparent and essentially taste- and odor-less. Surprisingly, it was found that combining low contents of zinc pyrithione and silver with low contents of a zeolite compound significantly increased shelf-life of foodstuff. The present invention allows at least 50% longer shelf-life of perishable goods such as foodstuff than comparable unprotected goods. A surprising synergistic effect of the combination of the aforementioned components was found. The material was well transparent and essentially taste - and odor-less.

Accordingly, a first aspect of the present invention relates to a polymer composition comprising (or consisting of):
(A) a thermoplastic polymer matrix (component A);
(B) 50 to 6000 ppm (parts per million), related to the polymer composition, of zinc pyrithione (component B);
(C) 50 to 6000 ppm, related to the polymer composition, of silver, optionally in uncharged form or in ionic form comprised in a silver salt (component C);
(D) 100 to 6000 ppm, related to the polymer composition, of a zeolite (component D); and optionally
(E) 0 to 5% by weight, related to the polymer composition, of one or more polymer additives (component E);
wherein said polymer composition comprises components B:C in a mass ratio in the range of 1.5:1 to 20:1.

The content of component C refers to the silver content and is independent of an optional counterion or complex-forming partner.

In a preferred embodiment, the total zeolite content of the polymer composition is below 2% by weight, more preferably below 1 % by weight.

In a preferred embodiment, the polymer composition of the present invention comprises 95 to 99.98% by weight, 96 to 99.9% by weight, or 97 to 99.9% by weight, of a thermoplastic polymer matrix (component A).

In a preferred embodiment, the polymer composition of the present invention comprises 0 to 3% by weight or 0.1 to 2% by weight, related to the polymer composition, of one or more polymer additives (component E).

In a preferred embodiment, the polymer composition of the present invention comprises (or consists of):
(A) 95 to 99.98% by weight, in particular 96 to 99.9% by weight, or often 97 to 99.9% by weight of a thermoplastic polymer matrix (component A);
(B) 50 to 6000 ppm, related to the polymer composition, of zinc pyrithione (component B);
(C) 50 to 6000 ppm, related to the polymer composition, of silver, optionally in uncharged form or in ionic form comprised in a silver salt (component C);
(D) 100 to 6000 ppm, related to the polymer composition, of a zeolite (component D); and optionally
(E) 0 to 5% by weight, 0 to 3% by weight, or 0.1 to 2% by weight, related to the polymer composition, of one or more polymer additives (component E).

In an embodiment of the present invention, the polymer composition of the present invention may comprise 50 to 500 ppm, 55 to 750 ppm, 60 to 1000 ppm, 65 to 2000 ppm, 70 to 3000 ppm, 75 to 4000 ppm, 80 to 5000 ppm, 500 to 3000 ppm, or 500 to 6000 ppm, related to the polymer composition, of zinc pyrithione (component B);

In an embodiment of the present invention, the polymer composition of the present invention may comprise 50 to 500 ppm, 55 to 750 ppm, 60 to 1000 ppm, 65 to 2000 ppm, 70 to 3000 ppm, 75 to 4000 ppm, 80 to 5000 ppm, 200 to 6000 ppm, or 500 to 6000 ppm, related to the polymer composition, of silver (component C).

The sum of components B and C may be in the range of 100 to 12000 ppm, 125 to 10000 ppm, 150 to 9000 ppm, 200 to 8000 ppm, 500 to 3000 ppm, or 500 to 6000 ppm.

In an embodiment of the present invention, the polymer composition of the present invention may comprise 100 to 500 ppm, 125 to 750 ppm, 150 to 1000 ppm, 175 to 2000 ppm, 180 to 3000 ppm, 190 to 4000 ppm, 200 to 5000 ppm, 500 to 5000ppm, or 500 to 6000 ppm, related to the polymer composition, of a zeolite (component D).

Optionally, components B and C may also be used as a commercially available combination. Then, 10 to 12000 ppm of a combination of components B and C may be used.

The polymer matrix A may be understood in the broadest sense as any thermoplastic polymer matrix, i.e. a polymer matrix that becomes pliable or moldable above a specific temperature and solidifies upon cooling. It may also be designated as thermosoftening plastic. In a preferred embodiment, the polymer matrix A comprises at least 50% by weight, at least 60% by weight, at least 70% by weight, at least 80% by weight, at least 90% by weight, or more than 90% by weight or consists of thermoplastic polymers.

In a preferred embodiment, the components of the polymer matrix A are suitable and/or approved for use in contact with food stuff, beverages and other human consumables.

In the context of the present invention, the term "polymer" may be understood in the broadest sense as generally understood by a person skilled in the art. A polymer may be any molecule of high relative molecular mass, the structure of which essentially comprises the multiple repetition of units derived, actually or conceptually, from molecules of low relative molecular mass. Typically, a polymer in the sense of the present invention has a molecular mass of above 1000 Da, preferably above 5 kDa or above 10 kDa.

In one embodiment, the components of the polymer matrix A each have a density of 0.5 to 1.5 g/cm³, more preferably of 0.8 to 1.2 g/cm³, even more preferably of 0.85 to 0.99 g/cm³ (as determined by ASTM D792). In one embodiment, the components of the polymer matrix A each have a density of 0.90 to 0.98 g/cm³ or 0.91 to 0.93 g/cm³ g/cm³ (as determined by ASTM D792).

As far as not defined otherwise, the ASTM norms mentioned herein refer to the ASTM norms in force and up-to-date on July 1, 2018).

In one embodiment, the components of the polymer matrix A each have a melt flow rate (MFR) of 0.2 to 20 g/10min (as determined at 190°C/2.16 kg according to ASTM D1238). In one embodiment, the components of the polymer matrix A each have a melt flow rate (MFR) of 0.25 to 9 g/10min (as determined at 190°C/2.16 kg according to ASTM D1238).

In a preferred embodiment, the polymer matrix A is useful in such forming operations as film, sheet, and fiber extrusion and co-extrusion as well as blow molding, injection molding and rotary molding. Films include blown or cast films formed by co-extrusion or by lamination useful as shrink film, cling film, stretch film, sealing films, oriented films, snack packaging, heavy duty bags, grocery sacks, baked and frozen food packaging, medical packaging, industrial liners, membranes, etc. in food-contact and non-food contact applications.

In a preferred embodiment, the polymer matrix A comprises at least one olefinic polymer. In a preferred embodiment, the polymer matrix A comprises at least 50% by weight, at least 60% by weight, at least 70% by weight, at least 80% by weight, at least 90% by weight, or more than 90% by weight of one or more olefinic polymers. In a preferred embodiment, the polymer matrix A consists of at least one olefinic polymer.

The term "olefinic polymer" may be understood in the broadest sense as generally understood in the art. For example, olefinic polymer may be prepared from mono-olefins and/or di-olefins, such as, e.g., be polypropylene, poly-isobutylene, polybutene-1, poly-methylpentene-1, poly-isoprene, or polybutadiene, as well as (co)polymers of cyclo-olefins, for instance of cyclo-pentene or norbornene, which each can be optionally cross-linked. Mixtures of these (co)polymers, for example, mixtures of polypropylene with poly-isobutylene, polypropylene with polyethylene (for example PP/HDPE, PPILDPE) and mixtures of different types of polyethylene (for example LDPE/HDPE), may also be used in the polymer matrix A. Therefore, also useful in the polymer matrix A are copolymers of mono-olefins and di-olefins with each other or with other vinyl monomers, such as, for example, ethylene/propylene, LLDPE and its mixtures with LDPE, propylene/butene-1, ethylene/hexene, ethylene/ethylpentene, ethylene/heptene, ethylene/octene, propylene/isobutylene, ethylene/butane-1, propylene/butadiene, isobutylene, isoprene, ethylene/alkyl acrylates, ethylene/alkyl methacrylates, ethylene/vinyl acetate (EVA) or ethylene/acrylic acid copolymers (EAA) and their salts (ionomers) and terpolymers of ethylene with propylene and a diene, such as hexadiene, dicyclopentadiene or ethylidene-norbomene; as well as mixtures of such copolymers and their mixtures with (co)polymers mentioned above, for example polypropylene/ethylene propylene copolymers, LDPE/EVA, LDPE/EAA, LLDPE/EVA, and LLDPE/EAA.

In a preferred embodiment, the polymer components of the polymer matrix A may regular resins suitable for the manufacture of flexible films through blown film extrusion and/or cast film extrusion processes regularly employed by the industry of flexible films. The polymer components of polymer matrix A may be homopolymers, random or heterophasic copolymers.

In a preferred embodiment, the polymer matrix A comprises, preferably comprises at least 50% by weight, at least 60% by weight, at least 70% by weight, at least 80% by weight, at least 90% by weight, or more than 90% by weight of one or more polymer components selected from the group consisting of polyethylene (PE), polypropylene (PP), ethylene-vinyl acetate (EVA) copolymer and blends of two or more thereof.

In a preferred embodiment, the polymer matrix A is selected from the group consisting of polyethylene (PE), polypropylene (PP), ethylene-vinyl acetate (EVA) copolymer and blends of two or more thereof.

In a preferred embodiment, the polymer matrix A comprises one or more types of polyethylene. In an embodiment, the polymer matrix A comprises, preferably comprises at least 50% by weight, at least 60% by weight, at least 70% by weight, at least 80% by weight, at least 90% by weight, or more than 90% by weight of one or more types of polyethylene. In one embodiment, the polymer matrix A consists of one or more types of polyethylene. In one embodiment, comprises or consists of two, three or more types of polyethylene.

In the context of the present invention, polyethylene may be low density polyethylene (LDPE), linear low density polyethylene (LLDPE), or polyethylene (HDPE). Polyethylene in the sense of the present invention may also be defined as very low density polyethylene (VLDPE), medium density polyethylene (MDPE), ultra-high molecular-weight polyethylene (UHMWPE), or cross linked polyethylene (PEX or XLPE).

As an example, the polymer matrix A may comprise or consist of a blend of one or more low density polyethylenes (LDPE) and one or more linear low density polyethylene (LLDPE). For example, the LDPE : LLDPE ratio may be in the range of from 10:90 to 90:10. the LDPE : LLDPE ratio may be in the range of from 20:80 to 80:20, 30:70 to 70:30, or 40:60 to 60:40.

A polymer additive usable as component E may be any additive known in polymer chemistry. For example, a polymer additive E may be selected from the group consisting of antioxidants, acid scavengers UV stabilizers, UV absorbers, UV quenchers, antistatics, flame retardants, lubricants, plasticizers, nucleating agents, metal deactivators, biocides, impact modifiers, fillers, dyes, and pigments.

For example, polymer additives E may be selected from the group consisting of antioxidants, such as sterically hindered phenols, secondary aromatic amines or thioethers, acid scavengers such as sodium stearate, magnesium stearate, zinc stearate, calcium stearate, sodium lactate, magnesium lactate, zinc lactate and calcium lactate, hydrotalcites or alkoxylated amines; UV stabilizers, and also other sterically hindered amines (HALSs) (such as N-unsubstituted, N-alkyl, N-O-alkyl or N-acyl substituted 2,2,6,6-tetramethylpiperidine compounds) and UV absorbers (such as 2-(2'-hydroxy¬phenyl)benzotriazoles, 2-hydroxybenzophenones, (2-hydroxyphenyl)triazines, 1,3-bis(2'-hydroxybenzoyl)benzosalicylates, benzylidene-malonates, oxanilides and cinnamates and oxamides), UV quenchers (such as nickel complexes, benzoates and substituted benzoates), antistatics, flame retardants, lubricants, plasticizers, nucleating agents, metal deactivators, biocides, impact modifiers, fillers, dyes, pigments and fungicides. Further polymer additives usable in the polymer compositions of the present invention may be such as described in "Kunststoff-Additive" [Plastics Additives] - Gächter and Müller, 3rd Edition, 1990, p. 42-50).

In a preferred embodiment, the polymer additive is not an antimicrobial agent. In an alternative preferred embodiment, the polymer additive may be or comprise an additional antimicrobial agent.

In a preferred embodiment, zinc pyrithione (component B) is used in excess over silver (component C).

In a preferred embodiment, the polymer composition comprises components B:C mass ratio in the range of 1.5:1 to 20:1. The B:C mass ratio may be in the range of 1.5:1 to 2:1, 2:1 to 5:1, 3:1 to 6:1, 4:1 to 8:1, 5:1 to 10:1, 6:1 to 15:1, 10:1 to 19:1, or 15:1 to 20:1. For example, the B:C mass ratio may be (approximately) 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1.

In a preferred embodiment, the polymer composition comprises components zinc:silver mass ratio in the range of 1.5:1 to 20:1. The zinc:silver mass ratio may be in the range of 1.5:1 to 2:1, 2:1 to 5:1,3:1 to 6:1,4:1 to 8:1, 5:1 to 10:1, 6:1 to 15:1, 10:1 to 19:1, or 15:1 to 20:1. For example, the B:C mass ratio may be (approximately) 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1.

The zeolite used as component D may be any zeolite. Preferably, the zeolite is a particulate zeolite.

In a preferred embodiment, the zeolite (component D) is a hydrophobic particulate zeolite having a mean average particle size in the range of 0.5 to 50 µm. In a further embodiment of the present invention, the zeolite (component D) is a hydrophobic particulate zeolite having a mean average particle size in the range of 0.6 to 40 µm, 1 to 30 µm, 2 to 20 µm, 3 to 15 µm, 5 to 10 µm, or 6 to 9 µm.

In an embodiment of the present invention, the zeolite (component D) bears a loss on ignition (LOI) of <50% by weight, <20% by weight, <10% by weight, or <8% by weight. In an embodiment of the present invention, the zeolite (component D) has a thermal stability of >500°C, >600°C, >700°C, or >800°C.

Optionally, without being bound to this theory, the zeolite may create a molecular sieve effect that may improve contact of microorganisms briefly or long-lasting contacted with the polymer composition. Zeolite as a molecular sieve may work synergistically with the antimicrobial blend preventing fungal, yeast, algi and mould formation without direct contact to a perishable good and without packaging structure changes such as new layers or coatings applied externally to the packaging. This may improve the effect of antimicrobials in a synergistic manner. This may allow the polymer composition of the present invention to be effective even when not in direct contact to perishable goods. Optionally, without being bound to this theory, the zeolite may further allow gas, humidity and volatile organic compound permeation, diffusion and adsorption and may play a beneficial role in gas exchange inside and outside a packaging.

As used herein, an antimicrobial effect may be understood in the broadest sense as acting against mould, bacterial, fungal, algi and/or yeast growth. In other words, the antimicrobial effect may be avoiding biologic proliferation.

The present invention also refers to a respective use of the polymer composition or any products partly or completely composed thereof.

In a preferred embodiment, the polymer composition comprises (or consist of):
(A) a thermoplastic polymer matrix (component A) consisting of an olefinic polymer or a blend of olefinic polymers;
(B) 50 to 3000 ppm, related to the polymer composition, of zinc pyrithione (component B);
(C) 50 to 3000 ppm, related to the polymer composition, of silver, optionally in uncharged form or in ionic form comprised in a silver salt (component C);
(D) 200 to 5000 ppm, related to the polymer composition, of a zeolite (component D); and optionally
(E) 0 to 5% by weight, related to the polymer composition, of one or more polymer additives (component E),
wherein said polymer composition comprises components B : C is a mass ratio of between 2:1 and 20:1.

When preparing the polymer composition, each component may be added separately or two or more components may be premixed with each other and added as a mixture.

In a preferred embodiment, components B and C are premixed to form a masterbatch added to the other components. In another preferred embodiment, components B, C and D are premixed to form a masterbatch added to the other components.

Accordingly, the present invention also relates to a masterbatch for preparing a polymer composition of the present invention, comprising or consisting of:
0.5 to 85% by weight, preferably 1 to 85 % by weight, related to the masterbatch, of zinc pyrithione;
0.5 to 30 % by weight, related to the masterbatch, of silver ions comprised in a silver salt; and optionally
up to 85 % by weight, related to the masterbatch, of a zeolite; and optionally up to 60% by weight of a thermoplastic polymer matrix; and optionally one or more polymer additives; and optionally
one or more solvents,
wherein the zinc pyrithione : silver ion mass ratio on the masterbatch is in the range of 1.5:1 and 20:1.

The definitions and preferred embodiments as laid out in the context of the polymer composition of the present invention herein apply *mutatis mutandis* to the masterbatch of the present invention. The masterbatch may be considered as a concentrate of the above mentioned components in a olefin polymeric resin vehicle (LDPE, LLDPE, HDPE, PP and EVA) and may be added directly to the mass of a resin of the polymer matrix A.

The masterbatch may also be a drop-in solution usable without adding further steps to the flexible packaging preparation, optionally providing a one-step solution to increase shelf-life (e.g., enhancing bread shelf-life)

The masterbatch may be obtained by any means. Optionally, components B and C may also be used as an commercially available combination. Then, 10 to 12000 ppm of a combination of components B and C may be used.

In a preferred embodiment, the contents of components B and/or C and/or, if present, D comprised in the masterbatch are (approximately) each 10 to 200-fold higher than in the polymer composition of the present invention. For example, the contents of components B and/or C and/or, if present, D comprised in the masterbatch may be (approximately) each 10 to 20-fold, 15 to 50-fold, 25 to 100-fold, 50 to 100-fold, 75 to 100-fold, 75 to 150-fold, or 75 to 200-fold, higher than in the polymer composition of the present invention. The content will depend on the dilution factor of in the further components of the polymer composition of the present invention.

In an embodiment of the present invention, the masterbatch may comprise 0.5 to 60% by weight, related to the masterbatch, of zinc pyrithione (component B). For example, the masterbatch may comprise 0.5 to 10% by weight, 0.51 to 25% by weight, 0.52 to 30% by weight, 5 to 40% by weight, or 10 to 50% by weight, related to the masterbatch, of zinc pyrithione (component B).

In an embodiment of the present invention, the masterbatch may comprise 0.5 to 60% by weight, related to the masterbatch, of silver (component C). For example, the masterbatch may comprise 0.5 to 10% by weight, 0.51 to 25% by weight, 0.52 to 30% by weight, 5 to 40% by weight, or 10 to 50% by weight, related to the masterbatch, of silver (component C).

The sum of components B and C in the masterbatch may be preferably in the range of 0.1 to 100 % by weight, preferably 1 to 95 % by weight or 10 to 90 % by weight related to the masterbatch.

The masterbatch may be used for preparing a polymer composition of the present invention. Accordingly, a further aspect of the present invention relates to a method for preparing a polymer composition of the present invention, said method comprising the following steps:
(i) providing:
   a thermoplastic polymer matrix (component A),
   zinc pyrithione (component B),
   silver ions (component C),
   a zeolite (component D), and optionally
   one or more polymer additives (component E); and
(ii) blending components A-D and, optionally, E, at a temperature above the melting temperature of component A.

It will be understood that the definitions and preferred embodiments as laid out in the context of the polymer composition and the masterbatch of the present invention herein *mutatis mutandis* apply to the method of the present invention.

In a preferred embodiment, in step (i), the components B and C and, optionally, component D, component E or component D and E are provided as a masterbatch of the present invention.

The step (ii) of blending components may be performed by any means. In a preferred embodiment, blending of step (ii) is performed by coextruding components A-D and, optionally, E. In this step, component A and optionally, E may be first extruded and the further components B-D are added in a subsequent step.

In a preferred embodiment, the method further comprises step (iii) of preparing a film by a step selected from the list consisting of blow film extrusion (blow forming), cast film extrusion, and extrusion coating on a solid support. In a further embodiment, also an extrusion blow molding process may be used.

Preferably, the method of the present invention is used for preparing a film comprising or consisting of the polymer composition of the present invention. Optionally, the film may also be laminated and/or (co)extruded.

Accordingly, a still further aspect of the present invention relates to film comprising or consisting of the polymer composition of the present invention.

It will be understood that the definitions and preferred embodiments as laid out in the context of the polymer composition, the masterbatch and the method of the present invention herein *mutatis mutandis* apply to the film of the present invention.

In a preferred embodiment, the film may be prepared as an film material as such or may be laminated to a surface. In a preferred embodiment, the film has a thickness of between 0.5 and 2000 µm, preferably 1 to 500 µm, more preferably 2 to 200 µm, 5 to 150 µm, 10 to 100 µm, or 20 to 50 µm. For example, the thickness may be (approximately) 20 µm, 25 µm, 30 µm, 35µm, 40 µm, 45 µm or 50 µm.

In a preferred embodiment, the film may be a blown or cast films formed by co-extrusion or by lamination. The film may be a food packaging, a shrink film, a cling film, a stretch film, a sealing film, an oriented film, a snack packaging, a heavy duty bag, a grocery sack, a baked and frozen food packaging, a medical packaging, an industrial liner, a membrane, etc. in food-contact and non-food contact applications.

Particularly preferably, the film is a food packaging. Accordingly, a further aspect of the present invention relates to a food packaging comprising or consisting of a polymer composition of the present invention or obtainable from a method of the present invention.

It will be understood that the definitions and preferred embodiments as laid out in the context of the polymer composition, the masterbatch, the film and the method of the present invention herein *mutatis mutandis* apply to the food packaging of the present invention. Food packing may be, exemplarily, a flexible bread packaging. It may be a single layer packaging or a multi-layered packaging (laminated and/or (co)extruded). Preferably, the food packing is a film as described herein. Food packing may be monolayer or multilayer packing.

As used herein, foodstuff may be understood in the broadest sense as any kind of comestible good including solid, creamy or liquid comestible goods. In a preferred embodiment, the foodstuff is a solid comestible good. In a preferred embodiment, the foodstuff is a bakery good. For example, it may be any kind of bread, cake, biscuit, or cookie.

In a preferred embodiment, the food packaging is or comprises a film consisting of a polymer composition of the present invention. As described above, the food packaging can be particularly well used for increasing shelf-life of perishable goods.

Accordingly, a further aspect of the present invention relates to the use of a food packaging of the present invention for increasing shelf-life of perishable goods such as foodstuff, medicinal goods, cosmetic goods, and consumer goods. Thus, the present invention relates to the use of a food packaging of the present invention for increasing shelf-life of foodstuff, wherein said foodstuff is contacted with the polymer composition of any one of the present invention or obtainable from a method of the present invention.

It will be understood that the definitions and preferred embodiments as laid out in the context of the polymer composition, the masterbatch, the film, the food packaging and the method of the present invention herein *mutatis mutandis* apply to the use of such material.

The present invention also relates to a method for increasing shelf-life of foodstuff, wherein foodstuff is contacted with a polymer composition of the present invention. In a preferred embodiment, increasing shelf-life of foodstuff is increasing bread shelf-life. In a preferred embodiment, the foodstuff is a baked good and increasing shelf-life includes preventing or slowing mildewing.

In a preferred embodiment, increasing shelf-life of foodstuff is increasing shelf-life by at least 1.1-fold, at least 1.15-fold, at least 1.25-fold, by at least 1.5-fold, at least 2-fold, or even at least 3-fold, in particular shelf-life of baked goods such as, e.g., bread, in comparison to a comparable foodstuff without protection. In a preferred embodiment, increasing shelf-life of foodstuff packed with the food packaging of the present invention is increasing shelf-life by at least 1.1-fold, at least 1.15-fold, at least 1.25-fold, by at least 1.5-fold, at least 2-fold, or even at least 3-fold, in particular shelf-life of baked goods such as, e.g., bread, in comparison to a comparable foodstuff packed with a comparable food packaging that does not comprise components B, C and D.

By this effect, for example, shelf-life of a bakery good such as, e.g., a bread may be extended beyond the usually expectable shelf-life (e.g., 10 days) for several days.

In a preferred embodiment, increasing shelf-life of foodstuff includes the decrease of microbial contamination by at least 1.1-fold, at least 1.15-fold, at least 1.25-fold, by at least 1.5-fold, at least 2-fold, or even at least 3-fold when incubated for 10 days.

The Examples and claims illustrate further embodiments of the present invention:

### Examples

### Materials

Thermoplastic polymer matrix components:
The low density polyethylene (LDPE) TX7003 has a density of 0.922 g/cm³ (as determined by ASTM D792) and a melt flow rate (MFR) of 0.27 g/10min (as determined at 190°C/2.16 kg according to ASTM D1238). LDPE TX7003 was purchased by Braskem S.A. (Sao Paulo, Brazil).

The linear low density polyethylene (LLDPE) LL318 has a density of 0.918 g/cm³ (as determined by ASTM D792) and a melt flow rate (MFR) of 2.7 g/10min (as determined at 190°C/2.16 kg according to ASTM D1238). LLDPE LL318 was purchased by Braskem S.A. (Sao Paulo, Brazil).

The low density polyethylene (LDPE) BC818 has a density of 0.918 g/cm³ (as determined by ASTM D1505) and a melt flow rate (MFR) of 8.3 g/10 min (as determined at 190°C/2.16 kg according to ASTM D1238). LDPE BC818 was purchased by Braskem S.A. (Sao Paulo, Brazil).

The linear low density polyethylene (LLDPE) IC32 has a density of 0.924 g/cm³ (as determined by ASTM D792) and a melt flow rate (MFR) of 29 g/10min (as determined at 190°C/2.16 kg according to ASTM D1238). LLDPE IC32 was purchased by Braskem S.A. (Sao Paulo, Brazil).

### Zinc Pyrithione and Silver:

The antimicrobial composition Life DJ/AM-00-1A contains zinc, pyrithione (as zinc pyrithione), silver and zeolite component, wherein the zinc content is specified as 15% by weight and the silver content as 5% by weight. Life DJ/AM-00-1A was purchased from Life Materials Technologies Ltd (Bangkok, Thailand).

### Zeolite:

The zeolite ZEOflair 100 is a white powder that has a value average particle size of <7 µm and a loss on ignition (LOI) of <8% by weight. It has a thermal stability of >800°C. ZEOflair 100 was purchased from Zeochem AG (Rüti, Switzerland).

### Preparing the Masterbatches

### Masterbatch 1

Using the above-defined components, an antimicrobial masterbatch was prepared in a twin screw, co-rotating, 70mm extruder (L/D 32) in the following ratios:
86.6% by weight of LDPE BC818,
10.0% by weight of ZEOflair 100, and
3.4% by weight of Life DJ/AM-00-1A.

### Masterbatch 2:

As described for Masterbatch 1 above, Masterbatch 2 was produced using 10% by weight of Life DJ/AM-00-1A and 30% by weight of a ZEOflair 100 in a LLDPE IC32.

### Compounding the Components and Preparing of Films

Film 1: LDPE TX7003 and LLDPE LL318 were blended with each other in a 1:1 ratio in a single screw extruded equipped with a monolayer blown film extrusion line. Then, 3% by weight of the Masterbatch 1, based on the weight of the entire composition, was added to the (LDPE TX7003 / LLDPE LL318) blend. Accordingly, the composition comprises 48.5% by weight of LDPE TX7003, 48.5% by weight of LLDPE LL318 and 3% by weight of the Masterbatch 1. Consequently, the composition comprised:
2.598% by weight of LDPE BC818,
0.3% by weight of ZEOflair 100,
0.102% by weight of DJ/AM-00-1A,
48,5% by weight of LDPE TX7003, and
48,5% by weight of LLDPE LL318.

A film having a thickness of 30 µm was prepared by a blown film line (single screw extruded, monolayer - 15mm screw, L/D 24). The film was fully transparent and had a good visible appearance. The film was odorless.

Film 2: By the procedural steps as described for Composition 1 above, 1% by weight of Masterbatch 2 was blended with a LDPE resin in the extruder machine. Consequently, the composition comprised:
2.6% by weight of LLDPE IC32,
0.3% by weight of ZEOflair 100,
0.1% by weight of DJ/AM-00-1A,
48,5% by weight of LDPE TX7003, and
48,5% by weight of LLDPE LL318.

A film of a thickness of approximately 30 µm was obtained. The film was fully transparent and had a good visible appearance. The film was odorless.

### Biological Testing of the Films

Common essentially cuboidal loafs of breads were each wrapped with a film as prepared in the preceding step or comparative films:
Examples E1 and E2 according to the present invention: PE bread packaging prepared as laid out above including the Masterbatch 1 (Example E1) or Masterbatch 2 (Example E2)
Comparative Example C1: Commercially available bread packaging, i.e., a comparable PE film without antimicrobials;
Comparative Example C2: , a comparable PE film prepared as laid out above, but without addition of a Masterbatch;
Comparative Example C3: a comparable PE film prepared as laid out above including 1000 ppm silver instead of the Masterbatch

The wrapped breads were then incubated for 33 days at 23°C and a relative humidity of 50% under controlled conditions. Appearance of the breads was investigated every few days. Further, the microbiological spore content was determined.

### Technical Results

**Table 1 Visual appearance after 20 days of incubation:**

| | E1 | E2 | C1 | C2 | C3 |
|---|---|---|---|---|---|
| Fungus visible | - | - | ++ | ++ | + |

| | | | | | |
|---|---|---|---|---|---|
| wherein: - means no fungus visible, + means a slight mildewing was visible (whitishness) ++ means a blue/green/greyish fungus was clearly visible. | | | | | |

After 33 days of incubation each of comparative examples C1-C3 showed an overall microbial spore density that is increased by >10⁵-fold, whereas in Example including the Masterbatch 1 or 2, the spore density is increased by <10-fold.

These results show that, although only particularly low contents of antimicrobial agents are used, the polymer compositions of the present invention bear a beneficial antimicrobial activity in for packed foodstuff. There is significant synergistic effect of the antimicrobial agents zinc pyrithione and silver with a zeolite. Furthermore, the low contents of antimicrobial agents allow the preparation of transparent films with a beneficial optical appearance. The film was essentially odorless.

It was found that shelf-life could be extended significantly beyond the expected shelf-life of 10 days. The loaf of bread packed by a film of a polymer composition of the present invention could be extended to more than a month.

## Claims

1. A polymer composition comprising:
(A) a thermoplastic polymer matrix (component A);
(B) 50 to 6000 ppm, related to the polymer composition, of zinc pyrithione (component B);
(C) 50 to 6000 ppm, related to the polymer composition, of silver, optionally in uncharged form or in ionic form comprised in a silver salt (component C);
(D) 100 to 6000 ppm, related to the polymer composition, of a zeolite (component D); and optionally
(E) 0 to 5% by weight, related to the polymer composition, of one or more polymer additives (component E);
wherein said polymer composition comprises components B:C in a mass ratio in the range of 1.5:1 to 20:1.

2. The polymer composition of claim 1, wherein the polymer matrix A comprises or consists of at least one olefinic polymer.

3. The polymer composition of any one of claims 1 or 2, wherein the polymer matrix A is selected from the group consisting of polyethylene, polypropylene, ethylene-vinyl acetate copolymer, and blends of two or more thereof.

4. The polymer composition of any one of claims 1 to 3, wherein the zeolite (component D) is a hydrophobic particulate zeolite having a mean average particle size in the range of 0.5 to 50 µm.

5. The polymer composition of any one of claims 1 to 4, wherein said polymer composition comprises:
(A) a thermoplastic polymer matrix (component A) consisting of an olefinic polymer or a blend of olefinic polymers;
(B) 50 to 6000 ppm, related to the polymer composition, of zinc pyrithione (component B);
(C) 50 to 1500 ppm, related to the polymer composition, of silver, optionally in uncharged form or in ionic form comprised in a silver salt (component C);
(D) 200 to 5000 ppm, related to the polymer composition, of a zeolite (component D); and optionally
(E) 0 to 5% by weight, related to the polymer composition, of one or more polymer additives (component E),
wherein said polymer composition comprises components B : C in a mass ratio of between 2:1 and 20:1.

6. A masterbatch for preparing a polymer composition of any one of claims 1 to 5, comprising or consisting of:
1 to 85 % by weight, related to the masterbatch, of zinc pyrithione;
0.5 to 30 % by weight, related to the masterbatch, of silver ions comprised in a silver salt; and optionally
up to 85 % by weight, related to the masterbatch, of a zeolite; and optionally
up to 60% by weight of a thermoplastic polymer matrix; and optionally
one or more polymer additives; and optionally
one or more solvents,
wherein the zinc pyrithione : silver ion mass ratio on the masterbatch is in the range of 1.5:1 and 20:1.

7. A method for preparing a polymer composition of any one of claims 1 to 5, said method comprising the following steps:
(i) providing:
a thermoplastic polymer matrix (component A),
zinc pyrithione (component B),
silver ions (component C),
a zeolite (component D), and optionally
one or more polymer additives (component E); and
(ii) blending components A-D and, optionally, E, at a temperature above the melting temperature of component A.

8. The method of claim 7, wherein in step (i), the components B and C and, optionally, component D, component E or component D and E are provided as a masterbatch according to claim 6.

9. The method of any one of claims 7 or 8, wherein blending of step (ii) is performed by coextruding components A-D and, optionally, E.

10. The method of any one of claims 7 to 9, wherein said method further comprises step (iii) of preparing a film by a step selected from the list consisting of blow film extrusion, cast film extrusion, and extrusion coating on a solid support.

11. A food packaging comprising or consisting of a polymer composition of any one of claims 1 to 5 or obtainable from a method of any of claims 7 to 10.

12. The food packaging of claim 11, wherein said food packaging is or comprises a film consisting of a polymer composition of any one of claims 1 to 5.

13. Use of a food packaging of any of claim 11 or 12 for increasing shelf-life of foodstuff, wherein said foodstuff is contacted with the polymer composition of any one of claims 1 to 6 or obtainable from a method of any of claims 7 to 10.

14. The use of claim 13, wherein the foodstuff is a baked good and increasing shelf-life includes preventing or slowing mildewing.

## Patentansprüche

1. Polymerzusammensetzung, umfassend:
(A) eine thermoplastische Polymermatrix (Komponente A);
(B) 50 bis 6000 ppm, bezogen auf die Polymerzusammensetzung, Zinkpyrithion (Komponente B);
(C) 50 bis 6000 ppm, bezogen auf die Polymerzusammensetzung, Silber, gegebenenfalls in ungeladener Form oder in ionischer Form, die in einem Silbersalz enthalten ist (Komponente C);
(D) 100 bis 6000 ppm, bezogen auf die Polymerzusammensetzung, an einem Zeolith (Komponente D); und gegebenenfalls
(E) 0 bis 5 Gew.-%, bezogen auf die Polymerzusammensetzung, an einem oder mehreren Polymerzusatzstoffen (Komponente E);
wobei die Polymerzusammensetzung die Komponenten B:C in einem Massenverhältnis in dem Bereich von 1,5:1 bis 20:1 umfasst.

2. Polymerzusammensetzung gemäß Anspruch 1, wobei die Polymermatrix A wenigstens ein olefinisches Polymer umfasst oder daraus besteht.

3. Polymerzusammensetzung gemäß einem der Ansprüche 1 oder 2, wobei die Polymermatrix A ausgewählt ist aus der Gruppe bestehend aus Polyethylen, Polypropylen, EthylenVinylacetat-Copolymer und Gemischen von zwei oder mehr davon.

4. Polymerzusammensetzung gemäß einem der Ansprüche 1 bis 3, wobei der Zeolith (Komponente D) ein hydrophober partikelförmiger Zeolith mit einer mittleren Partikelgröße in dem Bereich von 0,5 bis 50 µm ist.

5. Polymerzusammensetzung gemäß einem der Ansprüche 1 bis 4, wobei die Polymerzusammensetzung umfasst:
(A) eine thermoplastische Polymermatrix (Komponente A), bestehend aus einem olefinischen Polymer oder einem Gemisch von olefinischen Polymeren;
(B) 50 bis 6000 ppm, bezogen auf die Polymerzusammensetzung, Zinkpyrithion (Komponente B);
(C) 50 bis 1500 ppm, bezogen auf die Polymerzusammensetzung, Silber, gegebenenfalls in ungeladener Form oder in ionischer Form, die in einem Silbersalz enthalten ist (Komponente C);
(D) 200 bis 5000 ppm, bezogen auf die Polymerzusammensetzung, an einem Zeolith (Komponente D); und gegebenenfalls
(E) 0 bis 5 Gew.-%, bezogen auf die Polymerzusammensetzung, an einem oder mehreren Polymerzusatzstoffen (Komponente E);
wobei die Polymerzusammensetzung die Komponenten B:C in einem Massenverhältnis von zwischen 2:1 und 20:1 umfasst.

6. Vormischung zur Herstellung einer Polymerzusammensetzung gemäß einem der Ansprüche 1 bis 5, umfassend oder bestehend aus:
1 bis 85 Gew.-%, bezogen auf die Vormischung, Zinkpyrithion;
0,5 bis 30 Gew.-%, bezogen auf die Vormischung, Silberionen, die in einem Silbersalz enthalten sind; und gegebenenfalls
bis zu 85 Gew.-%, bezogen auf die Vormischung, an einem Zeolith; und gegebenenfalls
bis zu 60 Gew.-% an einer thermoplastischen Polymermatrix; und gegebenenfalls
einen oder mehrere Polymerzusatzstoffe; und gegebenenfalls
ein oder mehrere Lösungsmittel,
wobei das Massenverhältnis von Zinkpyrithion:Silberionen in der Vormischung in dem Bereich von 1,5:1 bis 20:1 liegt.

7. Verfahren zur Herstellung einer Polymerzusammensetzung gemäß einem der Ansprüche 1 bis 5, wobei das Verfahren die folgenden Schritte umfasst:
(i) Bereitstellen von:
einer thermoplastischen Polymermatrix (Komponente A),
Zinkpyrithion (Komponente B),
Silberionen (Komponente C),
einem Zeolith (Komponente D), und gegebenenfalls
einem oder mehreren Polymerzusatzstoffen (Komponente E); und
(ii) Mischen der Komponenten A-D und gegebenenfalls E bei einer Temperatur über der Schmelztemperatur der Komponente A.

8. Verfahren gemäß Anspruch 7, wobei bei Schritt (i) die Komponenten B und C und gegebenenfalls Komponente D, Komponente E oder Komponenten D und E als Vormischung gemäß Anspruch 6 bereitgestellt werden.

9. Verfahren gemäß einem der Ansprüche 7 oder 8, wobei das Mischen bei Schritt (ii) durch Koextrudieren der Komponenten A-D und gegebenenfalls E durchgeführt wird.

10. Verfahren gemäß einem der Ansprüche 7 bis 9, wobei das Verfahren ferner Schritt (iii) der Herstellung eines Films durch einen Schritt ausgewählt aus der Liste bestehend aus Blasfilmextrusion, Gießfilmextrusion und Extrusionsbeschichtung auf einem festen Träger umfasst.

11. Lebensmittelverpackung, umfassend die oder bestehend aus der Polymerzusammensetzung gemäß einem der Ansprüche 1 bis 5 oder erhältlich durch ein Verfahren gemäß einem der Ansprüche 7 bis 10.

12. Lebensmittelverpackung gemäß Anspruch 11, wobei die Lebensmittelverpackung ein/einen Film ist oder umfasst, der aus einer Polymerzusammensetzung gemäß einem der Ansprüche 1 bis 5 besteht.

13. Verwendung einer Lebensmittelverpackung gemäß einem der Ansprüche 11 oder 12 zum Erhöhen der Haltbarkeit von Lebensmitteln, wobei das Lebensmittel mit der Polymerzusammensetzung gemäß einem der Ansprüche 1 bis 6 in Kontakt gebracht wird oder erhältlich ist durch ein Verfahren gemäß einem der Ansprüche 7 bis 10.

14. Verwendung gemäß Anspruch 13, wobei das Lebensmittel eine Backware ist und Erhöhen der Haltbarkeit Schimmeln verhindert oder verlangsamt.

## Revendications

1. Composition de polymère comprenant :
(A) une matrice de polymère thermoplastique (composant A) ;
(B) 50 à 6000 ppm, par rapport à la composition de polymère, de zinc pyrithione (composant B) ;
(C) 50 à 6000 ppm, par rapport à la composition de polymère, d'argent, facultativement sous forme non chargée ou sous forme ionique comprise dans un sel d'argent (composant C) ;
(D) 100 à 6000 ppm, par rapport à la composition de polymère, d'une zéolite (composant D) ; et facultativement
(E) 0 à 5 % en poids, par rapport à la composition de polymère, d'un ou plusieurs additifs à base de polymère (composant E) ;
ladite composition de polymère comprenant les composants B:C dans un rapport en masse dans la plage de 1,5:1 à 20:1.

2. Composition de polymère selon la revendication 1, dans laquelle la matrice de polymère A comprend ou est constituée d'au moins un polymère oléfinique.

3. Composition de polymère selon l'une quelconque des revendications 1 ou 2, dans laquelle la matrice de polymère A est choisie dans le groupe constitué de polyéthylène, polypropylène, copolymère éthylène-acétate de vinyle, et des mélanges de deux ou plus de deux de ceux-ci.

4. Composition de polymère selon l'une quelconque des revendications 1 à 3, dans laquelle la zéolite (composant D) est une zéolite particulaire hydrophobe ayant une taille de particule moyenne dans la plage de 0,5 à 50 µm.

5. Composition de polymère selon l'une quelconque des revendications 1 à 4, ladite composition de polymère comprenant :
(A) une matrice de polymère thermoplastique (composant A) constituée d'un polymère oléfinique ou d'un mélange de polymères oléfiniques ;
(B) 50 à 6000 ppm, par rapport à la composition de polymère, de zinc pyrithione (composant B) ;
(C) 50 à 1500 ppm, par rapport à la composition de polymère, d'argent, facultativement sous forme non chargée ou sous forme ionique comprise dans un sel d'argent (composant C) ;
(D) 200 à 5000 ppm, par rapport à la composition de polymère, d'une zéolite (composant D) ; et facultativement
(E) 0 à 5 % en poids, par rapport à la composition de polymère, d'un ou plusieurs additifs à base de polymère (composant E),
ladite composition de polymère comprenant les composants B:C dans un rapport en masse compris entre 2:1 et 20:1.

6. Mélange maître pour préparer une composition de polymère selon l'une quelconque des revendications 1 à 5, comprenant ou constitué de :
1 à 85 % en poids, par rapport au mélange maître, de zinc pyrithione ;
0,5 à 30 % en poids, par rapport au mélange maître, d'ions d'argent compris dans un sel d'argent ; et facultativement
jusqu'à 85 % en poids, par rapport au mélange maître, d'une zéolite ; et facultativement
jusqu'à 60 % en poids d'une matrice de polymère thermoplastique ; et facultativement
un ou plusieurs additifs à base de polymère ; et facultativement
un ou plusieurs solvants,
dans lequel le rapport en masse zinc pyrithione : ion d'argent dans le mélange maître est dans la plage de 1,5:1 à 20:1.

7. Procédé de préparation d'une composition de polymère selon l'une quelconque des revendications 1 à 5, ledit procédé comprenant les étapes suivantes :
(i) fourniture de :
une matrice de polymère thermoplastique (composant A),
zinc pyrithione (composant B),
ions d'argent (composant C),
une zéolite (composant D), et facultativement
un ou plusieurs additifs à base de polymère (composant E) ; et
(ii) mélange des composants A à D et, facultativement, E, à une température au-dessus de la température de fusion du composant A.

8. Procédé selon la revendication 7, dans lequel, dans l'étape (i), les composants B et C et, facultativement, le composant D, le composant E ou les composants D et E sont fournis sous la forme d'un mélange maître selon la revendication 6.

9. Procédé selon l'une quelconque des revendications 7 ou 8, dans lequel le mélange de l'étape (ii) est effectué par coextrusion des composants A à D et, facultativement, E.

10. Procédé selon l'une quelconque des revendications 7 à 9, ledit procédé comprenant en outre l'étape (iii) de préparation d'un film par une étape choisie dans la liste constituée de l'extrusion de film par soufflage, l'extrusion de film par coulée et le revêtement par extrusion sur un support solide.

11. Emballage alimentaire comprenant ou constitué d'une composition de polymère selon l'une quelconque des revendications 1 à 5 ou pouvant être obtenu par un procédé selon l'une quelconque des revendications 7 à 10.

12. Emballage alimentaire selon la revendication 11, ledit emballage alimentaire étant ou comprenant un film constitué d'une composition de polymère selon l'une quelconque des revendications 1 à 5.

13. Utilisation d'un emballage alimentaire selon l'une quelconque de la revendication 11 ou 12 pour augmenter la durée de conservation d'un aliment, dans laquelle ledit aliment est mis en contact avec la composition de polymère selon l'une quelconque des revendications 1 à 6 ou pouvant être obtenue par un procédé selon l'une quelconque des revendications 7 à 10.

14. Utilisation selon la revendication 13, dans laquelle l'aliment est un article cuit et l'augmentation de la durée de conservation comprenant la prévention ou le ralentissement de la moisissure.
